# EUROPÄISCHE PATENTANMELDUNG

(11) **EP 3 088 493 A1**
(43) Veröffentlichungstag der Anmeldung: **02.11.2016**
(21) Anmeldenummer: 15165954.7
(22) Anmeldetag: 30.04.2015
(51) Int. Cl.: C10J 3/74, C10J 3/02

(54) **VERGASUNGSVORRICHTUNG FÜR BRENNSTOFFE**

(71) Anmelder: Ostbayerische Technische Hochschule Amberg-Weiden, 92224 Amberg (DE)
(72) Erfinder: Beer, Stefan, 92539 Schönesse (DE)
(74) Vertreter: Lucke, Andreas

(57) **Zusammenfassung**

Vergasungsvorrichtung für Brennstoffe, umfassend einen Innenraum, eine erste Öffnung, die dazu eingerichtet ist, im Betrieb die Zuführung von Brennstoffen in den Innenraum zu ermöglichen, und eine zweite Öffnung, die dazu eingerichtet ist, im Betrieb die Ausschleusung von festen Brennstoffvergasungsrückständen aus dem Innenraum zu ermöglichen, wobei zumindest eine den Innenraum begrenzende Wandfläche dazu eingerichtet ist, dass ein Volumen zumindest eines Teilabschnitts des Innenraums während des Betriebs der Vergasungsvorrichtung vergrößert wird.

## Beschreibung

### GEBIET DER ERFINDUNG

Die vorliegende Erfindung betrifft das Gebiet der Vergasungsvorrichtungen für Brennstoffe. Insbesondere betrifft die vorliegende Erfindung das Gebiet der Biomassekraftwerke und - heizkessel.

### HINTERGRUND DER ERFINDUNG

Bei der Verfeuerung von Brennstoffen wie Biomasse und insbesondere bei der Verfeuerung von pelletierter Biomasse wie Holzpellets wird der Brennstoff oftmals mit Primärluft vergast und die dabei entstehenden Gase anschließend mit Sekundärluft verbrannt. Dabei wird jedoch oftmals eine relativ große Menge an Stäuben produziert, so dass es nötig sein kann, das bei der Verfeuerung entstehende Rauchgas durch ein Filtersystem zu reinigen.

Kombiniert man die Verfeuerung mit einer Kraft-Wärme-Kopplungseinrichtung zur Stromgewinnung, wie beispielsweise mit einem Stirlingmotor oder mit einer ORC-Anlage (Organic-Rankine-Cycle-Anlage), kann zudem das Problem auftreten, dass die im Rauchgas enthaltenen Stäube Wärmetauscher zusetzen, so dass der Wärmeübergang abnimmt und somit die Leistung der Anlage reduziert wird.

Weiterhin können sich in den Stäuben hochkorrosive Substanzen befinden, wie beispielsweise Salze von Alkali- und Erdalkalielementen, die bei den typischerweise auftretenden hohen Temperaturen auch hochlegierte Stähle angreifen können.

### ZUSAMMENFASSUNG DER ERFINDUNG

Eine Möglichkeit, den Staubgehalt des Rauchgases zu verringern, besteht darin, die Brennstoffe in einem Gegenstromvergasungsverfahren zu vergasen, wobei unter dem Begriff eines Gegenstromvergasungsverfahrens wie er in der Anmeldung und den Ansprüchen benutzt wird jegliches Verfahren verstanden werden soll, bei dem das bei der Vergasung entstehende Gas durch eine Brennstoffschüttung, d. h. zumindest teilweise entgegen einer Zuführrichtung des Brennstoffs geführt wird.

Durch die Filterwirkung der Brennstoffschüttung kann der Staubgehalt des Gases reduziert werden. Dabei kann jedoch das Problem auftreten, dass das Volumen der Brennstoffschüttung prozessbedingt zunimmt und diese infolge dessen nicht mehr in Zuführrichtung weitertransportiert werden kann. Beispielsweise kann, wenn der Brennstoff das durchgeleitete Gas so stark abkühlt, dass der Wasserdampftaupunkt unterschritten wird, der Brennstoff auf Grund der an ihm kondensierenden Feuchtigkeit aufquellen. Das Aufquellen des Brennstoffs führt zu einer Volumenzunahme, die einen Weitertransport des Brennstoffs verhindern kann.

Die vorliegende Erfindung überwindet dieses Problem, indem eine Vergasungsvorrichtung für Brennstoffe nach Anspruch 1 bereitgestellt wird.

Die erfindungsgemäße Vergasungsvorrichtung für Brennstoffe umfasst einen Innenraum, eine erste Öffnung, die dazu eingerichtet ist, im Betrieb die Zuführung von Brennstoffen in den Innenraum zu ermöglichen und eine zweite Öffnung, die dazu eingerichtet ist, im Betrieb die Ausschleusung von festen Brennstoffvergasungsrückständen aus dem Innenraum zu ermöglichen, wobei zumindest eine den Innenraum begrenzende Wandfläche dazu eingerichtet ist, dass ein Volumen zumindest eines Teilabschnitts des Innenraums während des Betriebs der Vergasungsvorrichtung vergrößert wird.

Durch das Vergrößern des Volumens zumindest eines Teilabschnitts des Innenraums während des Betriebs der Vergasungsvorrichtung kann einer Volumenzunahme der Brennstoffe Rechnung getragen und ein Verstopfen des Innenraumes vermieden werden. Reinigungsintervalle können somit vergrößert und die Zuverlässigkeit der Vorrichtung kann erhöht werden.

Vorzugsweise ist die zumindest eine den Innenraum begrenzende Wandfläche dazu eingerichtet, dass das Volumen des zumindest einen Teilabschnitts des Innenraums in Antwort auf eine Vergrößerung des von den Brennstoffen auf die zumindest eine den Innenraum begrenzende Wandfläche ausgeübten Drucks vergrößert wird und/oder die zumindest eine den Innenraum begrenzende Wandfläche dazu eingerichtet, dass das Volumen des zumindest einen Teilabschnitts des Innenraums mittels einer mechanisch und/oder elektrisch angetriebenen Einrichtung vergrößert wird, welche dazu eingerichtet ist, eine Position und/oder eine Ausrichtung der zumindest einen den Innenraum begrenzenden Wandfläche zumindest temporär zu verändern, wobei eine durch die besagte Einrichtung hervorgerufene maximale Positionsveränderung vorzugsweise mehr als 5% einer Länge einer geraden, horizontal verlaufenden Strecke beträgt, welche eine Mitte des Innenraums schneidet und welche an der zumindest einen den Innenraum begrenzenden Wandfläche endet, und/oder eine durch die besagte Einrichtung hervorgerufene maximale Ausrichtungsänderung vorzugsweise mehr als 5° beträgt.

Dadurch, dass die zumindest eine den Innenraum begrenzende Wandfläche vorzugsweise dazu eingerichtet ist, auf eine Vergrößerung des von den Brennstoffen auf die zumindest eine den Innenraum begrenzende Wandfläche ausgeübten Drucks mit einer Positions- und/oder einer Ausrichtungsänderung zu antworten, wird erreicht, dass eine Volumenänderung einer in dem Innenraum befindlichen Brennstoffschüttung nicht zu einem erhöhten Druck führt, was ein "Zusammenbacken" der Brennstoffschüttung begünstigen könnte. Vielmehr kann durch das Nachgeben der zumindest einen den Innenraum begrenzenden Wandfläche erreicht werden, dass ein Druck in der Brennstoffschüttung auch bei Aufquellen derselben nahezu konstant bleibt und die Schüttfähigkeit der Brennstoffschüttung erhalten bleibt.

Dadurch, dass die zumindest eine den Innenraum begrenzende Wandfläche vorzugsweise dazu eingerichtet ist, dass das Volumen des zumindest einen Teilabschnitts des Innenraums mittels einer mechanisch und/oder elektrisch angetriebenen Einrichtung vergrößert wird, kann beispielsweise bei einer Verstopfung des Innenraumes erreicht werden, dass das an der zumindest einen den Innenraum begrenzenden Wandfläche haftende Schüttgut sich von der Wandfläche ablöst und die Verstopfung des Innenraums dadurch gelöst wird.

Vorzugsweise ist die erste Öffnung an einem oberen Ende des Innenraums angeordnet und die zweite Öffnung an einem unteren Ende des Innenraums angeordnet und/oder weist die Vergasungsvorrichtung eine Gasabführeinrichtung auf, welche vorzugsweise am oberen Ende des Innenraums angeordnet ist.

Das Ausschleusen von festen Brennstoffvergasungsrückständen aus dem Innenraum durch die zweite Öffnung und das Nachführen der Brennstoffe durch die erste Öffnung am oberen Ende des Innenraums ermöglicht eine einfache Bereitstellung einer Bremistoffschüttung mit einer vorbestimmten Höhe, welche sich ständig erneuert. Durch das Anordnen der Gasabführeinrichtung am oberen Ende des Innenraums wird ermöglicht, dass die gesamte im Innenraum zur Verfügung stehende Brennstoffschüttung zur Filterung der bei der Vergasung entstehenden Gase beiträgt. Der die Stäube aufnehmende Brennstoff wird anschließend vergast, so dass zumindest ein Teil der aus dem Gas gefilterten Stäube zusammen mit Asche über die zweite Öffnung aus dem Innenraum ausgeschleust werden kann.

Vorzugsweise weist ein erster horizontaler Querschnitt des Innenraums der Vergasungsvorrichtung eine erste Fläche auf und ein zweiter horizontaler Querschnitt des Innenraums, welcher von dem ersten horizontalen Querschnitt in Richtung eines/des oberen Endes des Innenraums beabstandet ist, eine zweite Fläche auf, die kleiner ist als die erste Fläche.

Durch die Verjüngung des Innenraums entgegen der Zuführrichtung der Brennstoffe kann eine Ausdehnung der Brennstoffe beim Transport durch einen Bereich, in dem der Wasserdampftaupunkt unterschritten wird und die Brennstoffe aufquellen, zumindest teilweise kompensiert werden.

Vorzugsweise ist zumindest ein Teilabschnitt des Innenraums konisch ausgeführt.

Die konische Ausführung zumindest eines Teilabschnitts des Innenraums erhöht die Stabilität der den Innenraum umgebenden Wandung.

Vorzugsweise ist der konische Teilabschnitt des Innenraums über einem zylindrischen Teilabschnitt des Innenraums angeordnet und ist die den konischen Teilabschnitt des Innenraums begrenzende Wandfläche relativ zu der den zylindrischen Teilabschnitt des Innenraums begrenzenden Wandfläche vertikal verschieblich gelagert.

Durch die vertikale Verschieblichkeit der den konischen Teilabschnitt des Innenraums begrenzenden Wandfläche wird erreicht, dass das Volumen des Innenraums durch Verschieben der den konischen Teilabschnitt des Innenraums begrenzenden Wandfläche nach oben vergrößert werden kann.

Vorzugsweise umfasst die Vergasungsvorrichtung ein Rückstellelement, wobei die den konischen Teilabschnitt des Innenraums begrenzende Wandfläche an dem Rückstellelement befestigt ist und das Rückstellelement dazu eingerichtet ist, die den konischen Teilabschnitt des Innenraums begrenzende Wandfläche bei einer Verschiebung der den konischen Teilabschnitt des Innenraums begrenzenden Wandfläche in vertikaler Richtung mit einer Rückstellkraft zu beaufschlagen.

Durch das Beaufschlagen der den konischen Teilabschnitt des Innenraums begrenzenden Wandfläche mit einer Rückstellkraft wird erreicht, dass die den konischen Teilabschnitt des Innenraums begrenzende Wandfläche bei einer Ausschleusung von festen Brennstoffrückständen in ihre ursprüngliche Position zurückkehrt und zur Kompensation einer Volumenvergrößerung der nachgeförderten Brennstoffe bereitsteht.

Vorzugsweise umfasst die Vergasungsvorrichtung ein Vibrationselement, welches dazu eingerichtet und angeordnet ist, die zumindest eine den Innenraum begrenzende Wandfläche zu Vibrationen anzuregen.

Durch das Anregen der zumindest einen den Innenraum begrenzenden Wandfläche zu Vibrationen wird das Ablösen einer an der Wandfläche anhaftenden Brennstoffschüttung unterstützt.

Vorzugsweise weist die Vergasungsvorrichtung zumindest einen Temperatursensor und eine Brennstoffzuführungsregelung auf, wobei die Brennstoffzuführungsregelung dazu eingerichtet ist, feste Brennstoffvergasungsrückstände aus dem Innenraum auszuschleusen und Brennstoffe in den Innenraum der Vergasungsvorrichtung zuzuführen, wenn aus den Messwerten des zumindest einen Temperatursensors ableitbar ist, dass sich ein Bereich höchster Temperatur im Innenraum der Vergasungsvorrichtung aus einem vorbestimmten Betriebsbereich in Richtung der ersten Öffnung bewegt, und wobei die Brennstoffzuführungsregelung vorzugsweise dazu eingerichtet ist, das Volumen des zumindest einen Teilabschnitts des Innenraums zu vergrößern, wenn aus den Messwerten des zumindest einen Temperatursensors ableitbar ist, dass sich ein Bereich höchster Temperatur im Innenraum der Vergasungsvorrichtung in Antwort auf das Ausschleusen von festen Brennstoffvergasungsrückständen aus dem Innenraum nicht in den vorbestimmten Betriebsbereich zurückbewegt.

Die Brennstoffzuführungsregelung kann somit die Höhe des Brennstoffschüttbetts immer in einem vorgegebenen Bereich und insbesondere annähernd gleich halten, indem verbrauchter Brennstoff umgehend durch neuen Brennstoff ersetzt wird. Der vorgegebene Bereich bzw. die vorgegebene Höhe kann dabei insbesondere so gewählt sein, dass beispielsweise das bei einem Biomassevergasungsprozess entstehende Gas beim Durchqueren des Biomasseschüttbetts so weit abkühlt, dass der Taupunkt des enthaltenen Wasserdampfes unterschritten wird, so dass Alkali- oder Erdalkaliverbindungen in dem Biomasseschüttbett zurückgehalten werden und insbesondere nicht als Teil des durch den Vergasungsprozess entstehenden Gasstroms aus dem Innenraum austreten.

Zum Halten der Höhe kann beispielsweise ein Rost, über dem die Vergasung stattfinden kann, immer dann betätigt werden, wenn zumindest ein Temperatursensor (z. B. ein Thermoelement), welcher beispielsweise in einer den Innenraum begrenzenden Wand angeordnet sein kann, anzeigt, dass die Reaktionszone (Oxidationsbereich) nach oben wandert. Durch die Rostbetätigung können bei dem Vergasungsprozess entstandene, feste Brennstoffvergasungsrückstände (Asche) ausgeschleust werden und kann die Reaktionszone, die die Tendenz hat, nach oben zu wandern, wieder nach unten geführt werden, beispielsweise in einen bevorzugten Bereich, welcher vom Rost in vertikaler Richtung um nicht mehr als einen vorbestimmten Abstand beabstandet ist.

Die Brennstoffzuführungsregelung kann ferner überwachen ob ein Ausschleusen von festen Brennstoffvergasungsrückständen aus dem Innenraum dazu führt, dass sich ein Bereich höchster Temperatur , d. h. der Oxidationsbereich, im Innenraum der Vergasungsvorrichtung in den vorbestimmten Betriebsbereich zurückbewegt. Wenn sich der Bereich höchster Temperatur im Innenraum der Vergasungsvorrichtung nicht in den vorbestimmten Betriebsbereich zurückbewegt, kann daraus geschlossen werden, dass die Brennstoffschüttung ihre Schüttfähigkeit eingebüßt hat und die Schüttfahigkeit aktiv, d. h. durch einen aktiven Eingriff, wiederhergestellt werden muss. Da ein Vergrößern des Volumens des zumindest einen Teilabschnitts des Innenraums einen Druck in der Schüttung verringert und dazu führt, dass sich an den Wänden des Innenraums anhaftende Brennstoffe von diesen lösen, unterstützt das Vergrößern des Volumens das Wiederherstellen der Schüttfähigkeit der Brennstoffe. Das Vergrößern des Volumens kann insbesondere auch als Teil eines periodischen Veränderns des Volumens erfolgen.

Vorzugsweise umfassen die Brennstoffe stückige Biomasse, vorzugsweise pelletierte Biomasse.

Da Biomasse und insbesondere pelletierte Biomasse zur Aufnahme von Feuchtigkeit und damit zum Quellen neigt, kann eine Verwendung der erfindungsgemäßen Vergasungsvorrichtung zur Vergasung von Biomasse, insbesondere von pelletierter Biomasse besonders vorteilhaft sein.

Vorzugsweise ist die Vergasungsvorrichtung Teil eines Biomasseheizkessels.

Vorzugsweise umfasst der Biomasseheizkessel ferner eine Brennkammer und ist der Biomasseheizkesselvorzugsweise dazu eingerichtet, im Betrieb Gas aus der Vergasungsvorrichtung im Gegenstromvergasungsverfahren in die Brennkammer zu leiten. Vorzugsweise ist der Biomasseheizkessel Teil eines Biomassekraftwerks, welches weiter bevorzugt ferner eine Kraft-Wärme-Kopplungseinheit umfasst, wobei die Kraft-Wärme-Kopplungseinheit vorzugsweise einen Stirlingmotor umfasst.

Kraft-Wärme-Kopplungseinheiten profitieren von der geringen Staubbelastung des dem Kraft-Wärme-Kopplungsprozess zugeführten Rauchgases, da durch die Filtration des Gases verhindert wird, dass im Rauchgas große Mengen an Stäuben vorhanden sind, die eine Oberfläche eines Wärmetauschers belegen und dadurch den Grad der Wärmeübertragung reduzieren.

Vorzugsweise wird die Vergasungsvorrichtung in einem Gegenstromvergasungsverfahren zum Vergasen von stückiger oder pelletierter Biomasse verwendet. Das Gegenstromvergasungsverfahren umfasst das Zuführen von stückiger oder pelletierter Biomasse in den Innenraum der Vergasungsvorrichtung, wobei sich in dem Innenraum der Vergasungsvorrichtung eine Biomasseschüttung ausbildet, das Zuführen von Sauerstoff in den Innenraum der Vergasungsvorrichtung, das Vergasen der Biomasseschüttung und das Abführen eines Gasgemischs durch die Biomasseschüttung.

Vorzugsweise umfasst das Gegenstromvergasungsverfahren zum Vergasen von stückiger oder pelletierter Biomasse ferner das Bestimmen, dass sich ein Bereich höchster Temperatur im Innenraum der Vergasungsvorrichtung aus einem Betriebsbereich in Richtung der ersten Öffnung bewegt und das Vergrößern des Volumens des zumindest einen Teilabschnitts des Innenraums.

### KURZBESCHREIBUNG DER ZEICHNUNGEN

FIG. 1A und 1B zeigen einen schematischen Längsschnitt eines bevorzugten Ausführungsbeispiels der erfindungsgemäßen Vergasungsvorrichtung;
FIG. 2 zeigt einen schematischen Längsschnitt eines weiteren bevorzugten Ausführungsbeispiels der erfindungsgemäßen Vergasungsvorrichtung; und
FIG. 3 zeigt einen schematischen Längsschnitt eines bevorzugten Ausführungsbeispiels eines Biomassekraftwerks, welches die Vergasungsvorrichtung aus FIG. 2 umfasst.

### BESCHREIBUNG BEVORZUGTER AUSFÜHRUNGSBEISPIELE

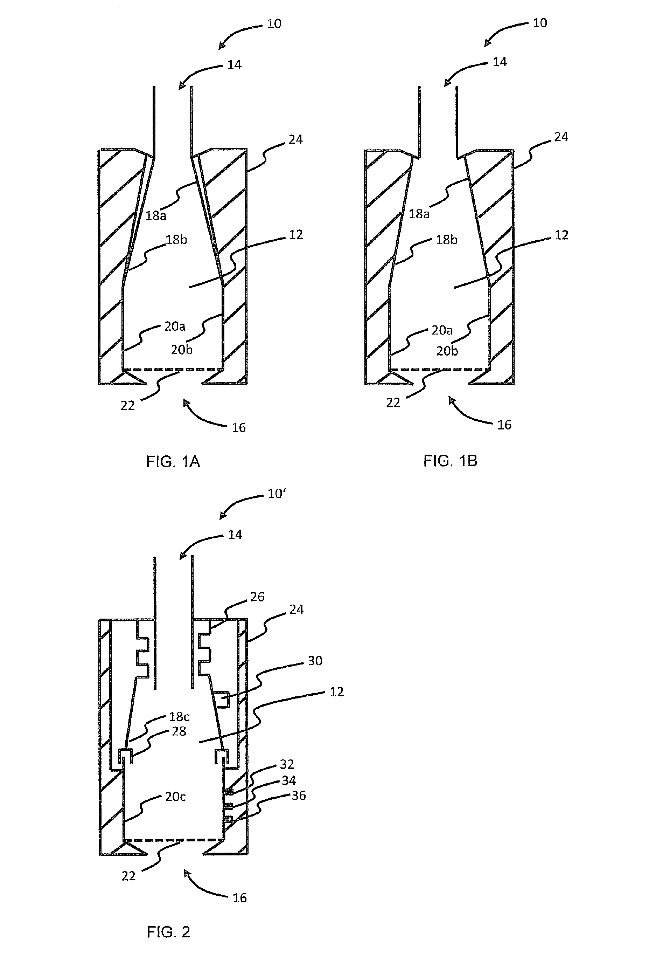

Die in FIG. 1A und 1B gezeigte Vergasungsvorrichtung 10 umfasst einen Innenraum 12, eine erste Öffnung 14, welche an einem oberen Ende der Vergasungsvorrichtung 10 angeordnet ist, und eine zweite Öffnung 16, welche an einem unteren Ende der Vergasungsvorrichtung 10 angeordnet ist.

Die erste Öffnung 14 ist dazu eingerichtet, im Betrieb die Zuführung von Brennstoffen in den Innenraum 12 zu ermöglichen. Die Zuführrichtung der Brennstoffe verläuft von der ersten Öffnung 14 durch den Innenraum 12 in Richtung der zweiten Öffnung 16. Die zweite Öffnung 16 ist dazu eingerichtet, im Betrieb die Ausschleusung von festen Brennstoffvergasungsrückständen aus dem Innenraum 12 zu ermöglichen.

Die entlang der Brennstoff-Zuführrichtung den Innenraum 12 durchquerenden Brennstoffe bilden auf einem in dem Innenraum 12 angeordneten Rost 22 eine Brennstoffschüttung aus. Zur Ausschleusung von festen Brennstoffvergasungsrückständen umfasst der Rost 22 eine antreibbare Brennstoffauflage, welche eine Vielzahl an Öffnungen aufweist, die dazu eingerichtet sind, für zu verwendende Brennstoffe, beispielsweise Holzpellets, undurchlässig und für bei der Vergasung entstehende feste Brennstoffvergasungsrückstände durchlässig zu sein. Anstatt einer antreibbaren Brennstoffauflage kann der Rost 22 auch einen antreibbaren Arm aufweisen. Ferner ist der Rost 22 dazu eingerichtet, Sauerstoff in den Innenraum 12 der Vergasungsvorrichtung 10 einströmen zu lassen. Alternativ oder zusätzlich kann auch vorgesehen sein, Sauerstoff über eine oder mehrere separate Zuführungen in den Innenraum 12 der Vergasungsvorrichtung 10 einzubringen. Zusätzlich kann in der Vergasungsvorrichtung 10 im Bereich des Rosts 22 eine Öffnung vorgesehen sein, welche für die Durchleitung von beispielsweise mit einem Heißluftgebläse erzeugter heißer Luft vorgesehen ist, um die Brennstoffe automatisch zu zünden.

Der Innenraum 12 der Vergasungsvorrichtung 10 ist in zwei Teilabschnitte unterteilt, welche durch eine horizontale Ebene voneinander getrennt sind. Der obere Teilabschnitt des Innenraums 12 ist durch zwei sich gegenüberliegende, parallele Wandflächen (nicht gezeigt) und durch die sich gegenüberliegenden Wandflächen 18a, 18b begrenzt, welche gegen die Vertikale geneigt sind, und besitzt einen sich entgegen der Zuführrichtung verjüngenden Querschnitt. Die den oberen Teilabschnitt des Innenraums 12 begrenzenden Wandflächen 18a, 18b sind dazu eingerichtet, das Volumen des oberen Teilabschnitts des Innenraums 12 während des Betriebs der Vergasungsvorrichtung 10 zu vergrößern.

Insbesondere sind die Wandflächen 18a, 18b dazu eingerichtet, dass ihre Ausrichtung verändert werden kann, indem sie gelenkig mit vertikalen Wandflächen 20a, 20b verbunden sind, welche einen unteren Teilabschnitt des Innenraums 12 begrenzen. Insbesondere sind, wie in den FIG. 1A und 1B gezeigt, die Wandflächen 18a, 18b dazu eingerichtet, um einen vorbestimmten Winkel, beispielsweise um mehr als 5° oder um mehr als 10° nach außen geschwenkt zu werden. Durch das Schwenken wird das Volumen des oberen Teilabschnitts des Innenraums 12 vergrößert, so dass beispielsweise ein durch ein Aufquellen des Brennstoffs erhöhter Platzbedarf kompensiert werden kann. Die Wandflächen 18a, 18b sind mit Rückstellelementen verbunden, welche bei Schwenkung der Wandflächen 18a, 18b nach außen, wie in FIG. 1B gezeigt, die Wandflächen 18a, 18b mit einer Rückstellkraft beaufschlagen, so dass die Wandflächen 18a, 18b bei Ausschleusung von festen Brennstoffvergasungsrückständen automatisch in ihre in FIG. 1A gezeigte Ausgangsposition zurückkehren.

Die Höhe des unteren Teilabschnitts des Innenraums 12 ist in Abhängigkeit von der zu erwartenden Betriebstemperatur und einer daraus abgeleiteten Temperaturverteilung im Innenraum 12 und unter Berücksichtigung einer zu erwartenden Feuchte des Brennstoffs so gewählt, dass ein Bereich, in dem eine Taupunktunterschreitung erwartet wird, im oberen Teilabschnitt des Innenraums 12 liegt. Die Vergasungsvorrichtung 10 umfasst ferner eine luftdichte Hülle 24, welche die den Innenraum 12 begrenzenden Wandflächen 18a, 18b, 20a, 20b einhüllt, und an deren Innenseite eine Isolierung angebracht ist. Die Wandflächen 20a, 20b bestehen aus einem hochtemperaturfesten Material wie beispielsweise Keramik, Schamotte oder Feuerfestbeton. Die Wandflächen 18a, 18b können aus Metall und insbesondere aus Edelstahl bestehen.

Die in FIG. 2 gezeigte Vergasungsvorrichtung 10' entspricht im Wesentlichen der in den FIG. 1A und 1B gezeigten Vergasungsvorrichtung 10, wobei gleiche oder ähnliche Elemente mit gleichen Bezugszeichen gekennzeichnet sind. In der Vergasungsvorrichtung 10' ist der untere Teilabschnitt des Innenraums 12 durch eine zylindrische Wandfläche 20c begrenzt. Ferner ist der obere Teilabschnitt in einen ersten oberen und einen zweiten oberen Teilabschnitt unterteilt, welche durch eine horizontale Ebene voneinander getrennt sind. Der erste obere Teilabschnitt, welcher unter dem zweiten oberen Teilabschnitt angeordnet ist, ist durch eine konische Wandfläche 18c begrenzt, die mit der Vertikalen einen Winkel von mehr als 15° einschließt.

Der zweite obere Teilabschnitt ist durch ein umlaufendes Rückstellelement 26 in Form eines Metallfaltenbalgs begrenzt, an dem die konische Wandfläche 18c befestigt ist. An dem nach unten zeigenden Rand der konischen Wandfläche 18c ist eine umlaufende Führung 28 vorgesehen, welche zwei zylindrische Abschnitte aufweist, die eine umlaufende Führungsrinne bilden, und die dazu eingerichtet sind, einen oberen Rand der zylindrischen Wandfläche 20c zwischen sich aufzunehmen, wobei die Führung 28 vorzugsweise ein horizontales und vertikales Spiel aufweist. Das Rückstellelement 26 ermöglicht eine Verschiebung des ersten oberen Teilabschnitts in vertikaler Richtung nach oben, wodurch das Volumen des Innenraums 12 vergrößert werden kann.

Wird im Betrieb der Innenraum 12 mit Brennstoffen wie beispielsweise Biomasse gefüllt, wird die konische Wandfläche 18c mit einem Druck beaufschlagt, welcher auf Grund der Formgebung der konischen Wandfläche 18c dazu führt, dass diese mit einer vertikal nach oben gerichteten Kraftkomponente beaufschlagt wird. Vergrößert sich der auf die konische Wandfläche 18c wirkende Druck, beispielsweise durch Aufquellen der im Innenraum 12 befindlichen Biomasse, erhöht sich die besagte, vertikal nach oben gerichtete Kraftkomponente. Die Erhöhung besagter Kraftkomponente bewirkt eine Kompression des Metallfaltenbalges, durch die sich die Ausdehnung des Metallfaltenbalges in vertikaler Richtung verringert, wobei sich die an dem Metallfaltenbalg befestigte, konische Wandfläche 18c vertikal nach oben bewegt und der Innenraum 12 vergrößert wird.

Ferner ist ein Vibrationselement 30, wie beispielsweise ein elektrisch oder pneumatisch betriebener Rüttler, mit der Wandfläche 18c verbunden, um die Wandfläche 18c zu Vibrationen anzuregen. In Verbindung mit dem elastischen Rückstellelement 26 und dem Spiel in der Führung 28 kann das Vibrationselement 30 die Wandfläche 18c zu Schwingungen anregen, wobei die durch die Schwingungen erzeugte Auslenkung durch das horizontale und vertikale Spiel in der Führung 28 begrenzt wird.

In die Hülle 24 sind drei Temperatursensoren 32, 34, 36 integriert. Die Messwerte der Temperatursensoren 32, 34, 36 werden an eine Brennstoffzuführungs- oder Rostbetätigungsregelung (nicht gezeigt) übertragen. Die Brennstoffzuführungs- oder Rostbetätigungsregelung ist dazu eingerichtet, aus den Temperaturdifferenzen zu bestimmen ob der Bereich höchster Temperatur in einem vorbestimmten Betriebsbereich liegt. Beispielsweise sind die Temperatursensoren 32, 34, 36, wie in FIG. 2 gezeigt, in vertikaler Richtung voneinander beabstandet an oder in der Nähe der Wandfläche 20c angeordnet, wobei einer der Temperatursensoren 36 an oder in der Nähe eines unteren Endes des vorbestimmten Bereichs angeordnet ist und einer der Temperatursensoren 32 an oder in der Nähe eines oberen Endes des vorbestimmten Bereichs angeordnet ist. Der verbleibende Temperatursensor 34 ist vorzugsweise mittig zwischen dem oberen und dem unteren Temperatursensor 32, 36 angeordnet.

Aus einem Vergleich der Temperaturdifferenzen kann darauf geschlossen werden ob der Bereich höchster Temperatur unter dem unteren Sensor 36, zwischen dem unteren Sensor 36 und dem oberen Sensor 32, oder über dem oberen Sensor 32 liegt. Liegt der Bereich höchster Temperatur unter dem unteren Sensor 36 muss nichts veranlasst werden, da sich der Bereich höchster Temperatur nach oben bewegt. Liegt der Bereich höchster Temperatur über dem oberen Sensor 32 können durch Antreiben des Rosts 22 feste Brennstoffvergasungsrückstände aus dem Innenraum 12 ausgeschleust werden, wodurch sich der Bereich höchster Temperatur nach unten bewegt. Bewegt sich der Bereich höchster Temperatur trotz des Ausschleusens von festen Brennstoffvergasungsrückständen aus dem Innenraum 12 nicht nach unten, kann auf eine Verstopfung des Innenraums 12 geschlossen werden. Zum Lösen der Verstopfung kann dann das Vibrationselement 30 aktiviert werden, um die Wandfläche 18c zu Schwingungen anzuregen und dadurch Brennstoffe von der Wandfläche 18c abzulösen.

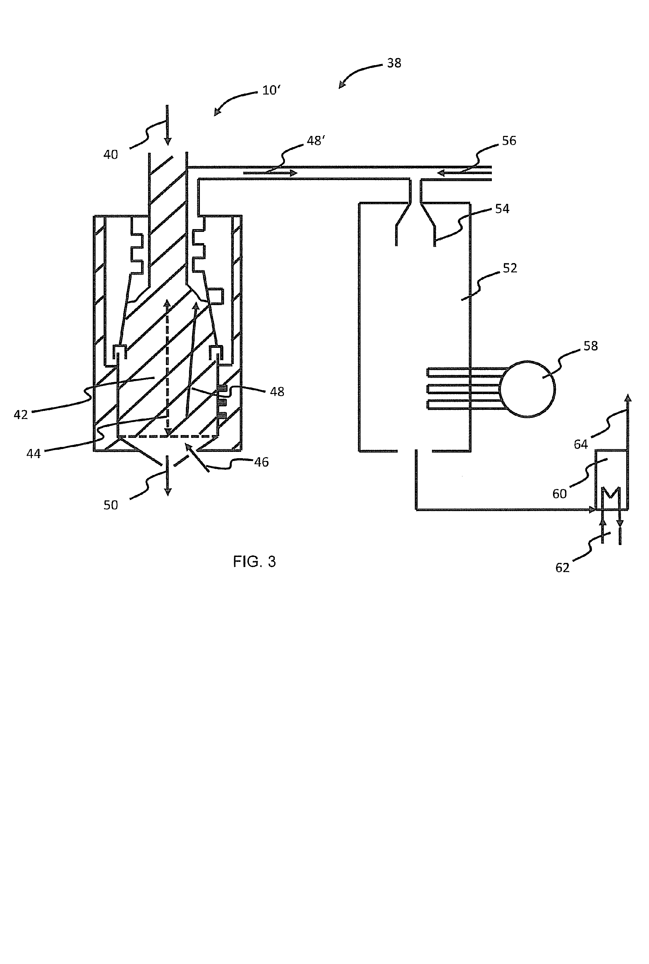

FIG. 3 zeigt einen schematischen Längsschnitt eines Biomassekraftwerks 38, welches die Vergasungsvorrichtung 10' aus FIG. 2 aufweist. Im Betrieb wird ein Biomassestrom 40 durch die erste Öffnung 14 in den Innenraum 12 der Vergasungsvorrichtung 10' geführt, wodurch sich auf dem Rost 22 eine Biomasseschüttung 42 einer definierten Höhe 44 ausbildet. Durch die zweite Öffnung 16 wird ein Primärluftstrom 46 in den Innenraum 12 der Vergasungsvorrichtung 10' geführt, wobei die Biomasseschüttung 42 auf dem Rost 22 im Gegenstromvergasungsverfahren vergast wird. Im Falle von Holzpellets findet das Gegenstromvergasungsverfahren beispielsweise bei einer Luftverhältniszahl von ca. 0,3-0,4 und bei Temperaturen zwischen 1000 und 1200 °C statt, wobei ein brennbares Gasgemisch 48 aus Wasserstoff, Kohlenmonoxid, Methan sowie langkettigen Kohlenwasserstoffverbindungen erzeugt wird.

Dieses Gasgemisch 48 durchströmt die kalte Biomasseschüttung 42 entgegen der Zuführrichtung (nach oben). Dabei kühlt sich das Gasgemisch 48 ab, wobei langkettige Kohlenwasserstoffverbindungen sowie anorganische Verbindungen, d. h. Aschebestandteile aus Alkali- und Erdalkalielementen auskondensiert werden. Ferner wirkt die Biomasseschüttung 42 als Schüttschichtfilter, der gröbere Aschebestandteile (z. B. Mineralien oder Holzkohlestücke) aus dem Gasgemisch 48 filtert. Dadurch, dass die Biomasseschüttung 42 am Rost 22 durch die Vergasung verbraucht wird, kann die Biomasseschüttung 42 durch den Biomassestrom 40 erneuert werden. Die nicht-brennbaren Anteile, d. h. die festen Brennstoffvergasungsrückstände werden durch die zweite Öffnung 16 als Aschestrom 50 aus dem Innenraum 12 ausgeschleust.

Der Staubgehalt des Gasgemischs 48 kann durch das Verändern der Höhe 44 der Biomasseschüttung 42 beeinflusst werden. Legt man beispielsweise bei der Vergasung von Holzpellets die Höhe 44 der Biomasseschüttung 42 so aus, dass die Holzgastemperatur bei Austritt aus der Holzpelletschüttung unterhalb von ca. 70-80°C liegt, wird der Wasserdampftaupunkt in der Holzpelletschüttung dauerhaft unterschritten. Damit einhergehend erreicht man ein staubarmes Holzgas, welches sich für den Betrieb einer Kraft-Wärme-Kopplungseinheit 58 eignet. Legt man die Höhe 44 der Biomasseschüttung 42 hingegen so aus, dass der Taupunkt in der Schüttung nicht unterschritten wird (Holzgasaustrittstemperaturen im Bereich von 70-80°C bis ca. 250°C) erhält man ein zunehmend staubreicheres Holzgas, das sich insbesondere für reine Heizkesselanwendungen eignet.

Das gereinigte Gasgemisch 48' wird einer Brennkammer 52 zugeführt, die einen Brenner 54 aufweist. Der Brenner 54 kann beispielsweise als Drallbrenner ausgeführt sein. Das gereinigte Gasgemisch 48' wird im Brenner 54 mit einem Sekundärluftstrom 56 gemischt. Die Brennkammer 52 kann luftgekühlt ausgeführt sein, beispielsweise um eine Brennkammeraustrittstemperatur auf eine Kraft-Wärme-Kopplungseinheit 58 wie beispielsweise einen Stirlingmotor abzustimmen. Alternativ kann die Brennkammer 52 wassergekühlt ausgeführt sein, insbesondere wenn die Brennkammer 52 Teil eines Biomasseheizkessels ist.

In Anschluss an die Brennkammer 52 (optional mit Kraft-Wärme-Kopplungseinheit 58) kann ein Heizwärmetauscher 60 vorgesehen sein, der dazu eingerichtet ist, von dem in der Brennkammer 52 erzeugten Rauchgasstrom 64 durchströmt zu werden, um Wärmeenergie an einen Heizkreislauf 62 abzugeben. Vorzugsweise ist der Heizwärmetauscher 60 so ausgeführt, dass eine Taupunktunterschreitung erreicht wird, um die in der Biomasse enthaltene Energie möglichst effizient zu nutzen (Brennwerttechnik). Der Heizwärmetauscher 60 kann dazu aus einem korrosionsfesten Material wie kunstharzgebundenem Kohlenstoff, Keramik oder Edelstahl ausgeführt sein. Alternativ kann der Heizwärmetauscher 60 auch aus Kesselstahl ausgeführt sein.

Ferner sind die einzelnen Komponenten des Biomassekraftwerks 38 vorzugsweise in einem gemeinsamen Gehäuse angeordnet.

### BEZUGSZEICHENLISTE

- 10, 10': Vergasungsvorrichtung
- 12: Innenraum
- 14: Öffnung
- 16: Öffnung
- 18a-18c: Wandfläche
- 20a-20c: Wandfläche
- 22: Rost
- 24: Hülle
- 26: Rückstellelement
- 28: Führung
- 30: Vibrationselement
- 32-36: Temperatursensor
- 38: Biomassekraftwerk
- 40: Biomassestrom
- 42: Biomasseschüttung
- 44: Höhe
- 46: Primärluftstrom
- 48: Gasgemisch
- 48': gereinigtes Gasgemisch
- 50: Aschestrom
- 52: Brennkammer
- 54: Brenner
- 56: Sekundärluftstrom
- 58: Kraft-Wärme-Kopplungseinheit
- 60: Heizwärmetauscher
- 62: Heizkreislauf
- 64: Rauchgasstrom

## Patentansprüche

1. Vergasungsvorrichtung (10, 10') für Brennstoffe, umfassend:
einen Innenraum (12);
eine erste Öffnung (14), die dazu eingerichtet ist, im Betrieb die Zuführung von Brennstoffen in den Innenraum (12) zu ermöglichen; und
eine zweite Öffnung (16), die dazu eingerichtet ist, im Betrieb die Ausschleusung von festen Brennstoffvergasungsrückständen aus dem Innenraum (12) zu ermöglichen;
**dadurch gekennzeichnet, dass**
zumindest eine den Innenraum (12) begrenzende Wandfläche (18a, 18b, 18c) dazu eingerichtet ist, dass ein Volumen zumindest eines Teilabschnitts des Innenraums (12) während des Betriebs der Vergasungsvorrichtung (10, 10') vergrößert wird.

2. Vergasungsvorrichtung (10, 10') nach Anspruch 1, wobei
die zumindest eine den Innenraum (12) begrenzende Wandfläche (18a, 18b, 18c) dazu eingerichtet ist, dass das Volumen des zumindest einen Teilabschnitts des Innenraums (12) in Antwort auf eine Vergrößerung des von den Brennstoffen auf die zumindest eine den Innenraum begrenzende Wandfläche (18a, 18b, 18c) ausgeübten Drucks vergrößert wird; und/oder
die zumindest eine den Innenraum (12) begrenzende Wandfläche (18a, 18b, 18c) dazu eingerichtet ist, dass das Volumen des zumindest einen Teilabschnitts des Innenraums (12) mittels einer mechanisch und/oder elektrisch angetriebenen Einrichtung vergrößert wird, welche dazu eingerichtet ist, eine Position und/oder eine Ausrichtung der zumindest einen den Innenraum (12) begrenzenden Wandfläche (18a, 18b, 18c) zumindest temporär zu verändern,
wobei eine durch die besagte Einrichtung hervorgerufene maximale Positionsveränderung vorzugsweise mehr als 5% einer Länge einer geraden, horizontal verlaufenden Strecke beträgt, welche eine Mitte des Innenraums (12) schneidet und welche an der zumindest einen den Innenraum (12) begrenzenden Wandfläche (18a, 18b, 18c) endet, und/oder eine durch die besagte Einrichtung hervorgerufene maximale Ausrichtungsänderung vorzugsweise mehr als 5° beträgt.

3. Vergasungsvorrichtung (10, 10') nach Anspruch 1 oder 2, wobei die erste Öffnung (14) an einem oberen Ende des Innenraums (12) angeordnet ist und die zweite Öffnung (16) an einem unteren Ende des Innenraums (12) angeordnet ist; und/oder wobei die Vergasungsvorrichtung (10, 10') eine Gasabführeinrichtung aufweist, welche vorzugsweise am oberen Ende des Innenraums (12) angeordnet ist.

4. Vergasungsvorrichtung (10, 10') nach einem der Ansprüche 1 bis 3, wobei ein erster horizontaler Querschnitt des Innenraums (12) der Vergasungsvorrichtung (10, 10') eine erste Fläche aufweist und ein zweiter horizontaler Querschnitt des Innenraums (12), welcher von dem ersten horizontalen Querschnitt in Richtung eines/des oberen Endes des Innenraums (12) beabstandet ist, eine zweite Fläche aufweist, die kleiner ist als die erste Fläche.

5. Vergasungsvorrichtung (10, 10') nach einem der Ansprüche 1 bis 4, wobei zumindest ein Teilabschnitt des Innenraums (12) konisch ausgeführt ist.

6. Vergasungsvorrichtung (10, 10') nach Anspruch 5, wobei der konische Teilabschnitt des Innenraums (12) über einem zylindrischen Teilabschnitt des Innenraums (12) angeordnet ist und die den konischen Teilabschnitt des Innenraums (12) begrenzende Wandfläche (18c) relativ zu der den zylindrischen Teilabschnitt des Innenraums begrenzenden Wandfläche (20c) vertikal verschieblich gelagert ist.

7. Vergasungsvorrichtung (10, 10') nach Anspruch 6, umfassend ein Rückstellelement (26), wobei die den konischen Teilabschnitt des Innenraums (12) begrenzende Wandfläche (18c) an dem Rückstellelement (26) befestigt ist und das Rückstellelement (26) dazu eingerichtet ist, die den konischen Teilabschnitt des Innenraums (12) begrenzende Wandfläche (18c) bei einer Verschiebung der den konischen Teilabschnitt des Innenraums begrenzenden Wandfläche (18c) in vertikaler Richtung mit einer Rückstellkraft zu beaufschlagen.

8. Vergasungsvorrichtung (10, 10') nach einem der Ansprüche 1 bis 7, wobei die Vergasungsvorrichtung (10) ein Vibrationselement (30) umfasst, welches dazu eingerichtet und angeordnet ist die zumindest eine den Innenraum (12) begrenzende Wandfläche (18a, 18b, 18c) zu Vibrationen anzuregen.

9. Vergasungsvorrichtung (10, 10') nach einem der Ansprüche 1 bis 8, wobei die Vergasungsvorrichtung (10, 10') zumindest einen Temperatursensor (32-36) und eine Brennstoffzuführungsregelung aufweist,
wobei die Brennstoffzuführungsregelung dazu eingerichtet ist, feste Brennstoffvergasungsrückstände aus dem Innenraum (12) auszuschleusen und Brennstoffe in den Innenraum (12) der Vergasungsvorrichtung (10, 10') zuzuführen, wenn aus den Messwerten des zumindest einen Temperatursensors (32-36) ableitbar ist, dass sich ein Bereich höchster Temperatur im Innenraum (12) der Vergasungsvorrichtung (10, 10') aus einem vorbestimmten Betriebsbereich in Richtung der ersten Öffnung (14) bewegt; und
wobei die Brennstoffzuführungsregelung vorzugsweise dazu eingerichtet ist, das Volumen des zumindest einen Teilabschnitts des Innenraums (12) zu vergrößern, wenn aus den Messwerten des zumindest einen Temperatursensors (32-36) ableitbar ist, dass sich ein Bereich höchster Temperatur im Innenraum (12) der Vergasungsvorrichtung (10, 10') in Antwort auf das Ausschleusen von festen Brennstoffvergasungsrückständen aus dem Innenraum (12) nicht in den vorbestimmten Betriebsbereich zurückbewegt.

10. Vergasungsvorrichtung (10, 10') nach einem der Ansprüche 1 bis 9, wobei die Brennstoffe stückige Biomasse, vorzugsweise pelletierte Biomasse umfassen.

11. Biomasseheizkessel umfassend eine Vergasungsvorrichtung (10, 10') nach einem der Ansprüche 1 bis 10.

12. Biomasseheizkessel nach Anspruch 11, ferner umfassend eine Brennkammer (52), wobei der Biomasseheizkessel dazu eingerichtet ist, im Betrieb Gas aus der Vergasungsvorrichtung (10, 10') im Gegenstromvergasungsverfahren in die Brennkammer (52) zu leiten.

13. Biomassekraftwerk (38) umfassend einen Biomasseheizkessel nach Anspruch 11 oder 12, ferner umfassend eine Kraft-Wärme-Kopplungseinheit (58), wobei die Kraft-Wärme-Kopplungseinheit (58) vorzugsweise einen Stirlingmotor umfasst.

14. Gegenstromvergasungsverfahren zum Vergasen von stückiger oder pelletierter Biomasse, umfassend:
Zuführen von stückiger oder pelletierter Biomasse in den Innenraum (12) einer Vergasungsvorrichtung (10, 10') nach einem der Ansprüche 1 bis 10; wobei sich in dem Innenraum (12) der Vergasungsvorrichtung (10, 10') eine Biomasseschüttung (42) ausbildet;
Zuführen von Sauerstoff in den Innenraum (12) der Vergasungsvorrichtung (10, 10');
Vergasen der Biomasseschüttung (42); und
Abführen eines Gasgemischs (48) durch die Biomasseschüttung (42).

15. Gegenstromvergasungsverfahren zum Vergasen von stückiger oder pelletierter Biomasse nach Anspruch 14, ferner umfassend:
Bestimmen, dass sich ein Bereich höchster Temperatur im Innenraum (12) der Vergasungsvorrichtung (10, 10') aus einem Betriebsbereich in Richtung der ersten Öffnung (14) bewegt; und
Vergrößern des Volumens des zumindest einen Teilabschnitts des Innenraums (12).
